# EUROPEAN PATENT APPLICATION

(11) **EP 2 045 025 A1**
(43) Date of publication of application: **08.04.2009**
(21) Application number: 07791196.4
(22) Date of filing: 23.07.2007
(51) Int. Cl.: B08B 17/02, B01J 35/02

(54) **METHOD FOR PROTECTING BASE BODY**

(30) Priority: 25.07.2006 JP 2006201991
(71) Applicant: Sustainable Titania Technology Incorporated, Tokyo 151-0053 (JP)
(72) Inventor: OGATA, Shiro, Sustainable Titania Technology Inc., Shibuya-ku, Tokyo 1510053 (JP)
(74) Representative: Desaix, Anne
(86) International application number: PCT/JP2007/064464
(87) International publication number: WO 2008/013148

(57) **Abstract**

The present invention has an objective to provide a novel method for preventing or reducing color degradation or color change of a substrate over time, and thereby, protecting the substrate, and is **characterized by** arranging positively-charged and negatively charged substances on a surface of a substrate or in a surface layer of the substrate.

## Description

### TECHNICAL FIELD

The present invention relates to a method for preventing or reducing contamination of the surface of a substrate, and protecting the surface of a substrate, by imparting a combination of positive and negative charges to the surface of the substrate.

### BACKGROUND ART

Conventionally, it is known that various colored substrates (such as printed articles, building materials, fibers, organic polymer resin products, and the like) become faded and discolored over time. Factors in such fading and discoloration include photodegradation, adhesion of contaminants to the surface of the substrate, and the like. Various methods have been developed as countermeasures therefor.

For example, in order to prevent photodegradation, a method in which an ultraviolet absorber is mixed in a substrate has been adopted.

Moreover, in order to prevent or remove adhesion of contaminants from the surface of a substrate, a method in which a coating film having an anti-contamination function or a self-cleaning function is formed on the surface of a substrate has been developed. An example of the aforementioned method is a method in which a photocatalytic layer is formed by employing anatase-type titanium oxide, described in Japanese Unexamined Patent Application, First Publication No. H09-262481.
Patent Document 1: Japanese Unexamined Patent Application, First Publication No. H09-262481

### DISCLOSURE OF THE INVENTION

### PROBLEMS TO BE SOLVED BY THE INVENTION

However, in the case of mixing an ultraviolet absorber in a substrate, the ultraviolet absorber is decomposed by the effects of components included in the substrate, and sufficient ultraviolet absorbing effects cannot be exhibited.

In addition, in the case of imparting a photocatalytic function to the surface of a substrate, the substrate itself may be decomposed and degraded by the photocatalytic effects, depending on the type of substrate. In addition, since the substrate having photocatalytic properties is negatively charged, there is a problem in electrostatically adsorbing contaminants with a positive charge.

The present invention has an objective to provide a novel method for preventing or reducing fading or discoloration of a substrate over time, and at the same time, preventing and reducing adhesion of contaminants.

### MEANS FOR SOLVING THE PROBLEMS

The objective of the present invention can be achieved by arranging a positively-charged substance and a negatively-charged substance on a surface of a substrate or in a surface layer of the substrate. The positively-charged substance is preferably at least one substance having a positive charge selected from the group consisting of (1) a positive ion; (2) a conductor or dielectric having a positive charge; and (3) a composite formed from a conductor having a positive charge and a dielectric or a semiconductor. The negatively-charged substance is preferably at least one substance having a negative charge selected from the group consisting of (4) a negative ion; (5) a conductor or dielectric having a negative charge; (6) a composite formed from a conductor having a negative charge and a dielectric or a semiconductor, and (7) a substance having photocatalytic function. The electrostatic voltage on the surface of the substrate is preferably from -50V to 50V.

The aforementioned substrate is preferably hydrophilic or alternatively hydrophobic, or water-repellent or alternatively oil-repellent.

The aforementioned positively-charged and negatively-charged substances preferably form a layer together. In this case, an intermediate layer may be formed between the surface of the aforementioned substrate and the layer of the aforementioned positively-charged and negatively-charged substances. A coating layer may be present on the layer of the aforementioned positively-charged and negatively-charged substances. An arbitrary surface property can be imparted to the substrate by selecting the material function of the intermediate layer and the coating layer.

### EFFECTS OF THE INVENTION

Airborne pollutants and/or contaminants adhered on the substrate are photo-oxidized by means of sunlight or the like, and a positive charge is acquired. On the surface of a substrate treated with the method according to the present invention, a positive charge is also produced. For this reason, the aforementioned contaminants are electrostatically repelled, and thereby, naturally separated from the surface of the substrate. Therefore, it is possible to self-clean the surface of the substrate.

Also, the surface of a substrate treated with the method according to the present invention has a negative charge. Therefore, contamination-inducing substances having a negative charge such as kaolinite, clay powders, chloride ion in tap water are electrostatically repelled as well, and thereby the adhesion thereof onto the substrate surface is prevented. Thus, changes in the substrate surface properties due to the adhesion of such impurities are prevented, and the surface of the substrate can be maintained to be clean.

Microorganisms such as mold, as well as plant cells such as pollens and those of algae often have both positive and negative charges. Further, the aforementioned contaminants having a positive charge may come to have positive and negative charges by the reversal of a part of the positive charge into negative charge due to, for example, friction with a substance which easily bears a positive charge. Furthermore, fibers such as cotton and silk may have positive and negative properties which may be reversible by friction with another substance.

Since the surface of the substrate treated with the method according to the present invention has positive and negative charges, it can reduce the adhesion of contaminants having both and positive and negative charges, as well as pollens, algae, mold and fibers, to the substrate.

If the amount of positive charge or negative charge is excessively large, contaminants having negative charge or contaminants having positive charge produced by photooxidation tend to adhere, and the surface of a substrate may finally be contaminated. Therefore, it is preferable that the positive charge amount and the negative charge amount on the substrate surface apparently balance with each other. Specifically, it is preferable that the electrostatic voltage on the substrate surface is within from -50V to 50V.

In addition, when the substrate, intermediate layer and/or the coating layer is hydrophilic or alternatively hydrophobic, or water-repellent or alternatively oil-repellent, by use of these properties, adhesion of contaminants to the surface of the substrate can be prevented or reduced for longer period of time.

In addition, the substrate treated with the method of the present invention possesses increased resistance with respect to the effects of sunlight or the like. Therefore, the substrate can be greatly protected from photodegradation caused by sunlight or the like. In addition, the substrate treated with the method according to the present invention can exhibits high resistance to contaminants not only in air but also in water.

In the present invention, due to the aforementioned effects, fading or discoloration of the substrate can be prevented or reduced for a long period of time.

In addition, the substrate treated with the method according to the present invention can stabilize minerals and chlorine-based compounds in water such as heavy metal ions (e.g., cadmium) and trihalomethanes, and suppress the growth of molds and algae, thereby it can purify water.

### BRIEF DESCRIPTION OF THE DRAWINGS

FIG. 1 is a diagram showing a mechanism of imparting positive and negative charges employed in the present invention.
FIG. 2 is a diagram showing another mechanism of imparting positive and negative charges employed in the present invention.
FIG. 3 is a drawing showing an outline of an example of a first method for manufacturing a metal-doped titanium oxide.
FIG. 4 is a drawing showing several modes of placing positive and negative charges on a substrate.
FIG. 5 is a diagram showing a mechanism of removing contaminants from the surface of a substrate which carries positive and negative charges.

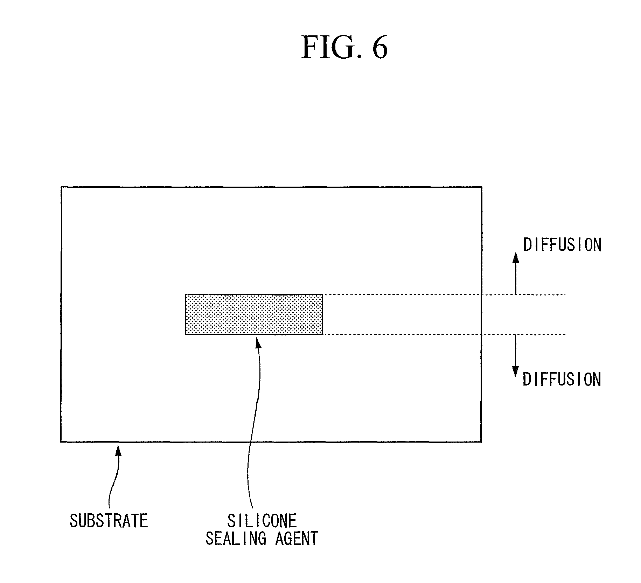

FIG. 6 is a drawing showing application of a silicone sealing agent in Evaluation 1.

### BEST MODES FOR CARRYING OUT THE INVENTION

With respect to contaminants which cause fading or discoloration of the surface of a substrate, inorganic substances such as airborne carbons and/or organic substances such as oils are gradually deposited on the surface of the substrate, and thereby, they adhere to the surface of the substrate.

The present invention is characterized by removal of the aforementioned contaminants from the substrate, or preventing or reducing adhesion of these contaminants to the substrate by means of electrostatic repulsion.

It is believed that mainly outdoor airborne contaminants, and in particular oil components, are subjected to a so-called photooxidation reaction due to various types of electromagnetic radiation such as sunlight and the like, and are in an "oxidized" condition.

A photooxidation reaction referrs to a phenomenon in which, when hydroxyl radicals (^{·}OH) or singlet oxygen (¹O₂) are produced from oxygen (O₂) or moisture (H₂O) on the surface of an organic product or an inorganic product due to the effects of electromagnetic radiation such as sunlight or the like, electrons (e⁻) are withdrawn from the aforementioned organic or inorganic product to thereby oxidize it. Due to the aforementioned oxidation, in the organic product, the molecular structure changes, so that discoloration or embrittlement which is referred to as deterioration is observed; in the inorganic product, and in particular, a metal, rust occurs. The surface of the "oxidized" organic product or inorganic product is thus positively charged by the withdrawal of electrons (e⁻).

In the present invention, by imparting first a positive charge on the surface of a substrate, the aforementioned organic product or inorganic product is naturally withdrawn from the surface of the substrate by means of electrostatic repulsion. As a method for imparting a positive charge on the surface of the substrate, mention may be made of, for example, a method in which a positively-charged substance selected from the group consisting of a positive ion, a conductor or dielectric having a positive charge, a composite formed from a conductor having a positive charge and a dielectric or a semiconductor, and a mixture thereof is arranged on the surface of the substrate or in a surface layer of the substrate.

The aforementioned positive ion is not particularly restricted. As the positive ion, an ion of alkali metal such as sodium and potassium; an ion of alkali earth metal such as calcium; and an ion of another metal element such as aluminum, tin, cesium, indium, cerium, selenium, chromium, nickel, antimony, iron, copper, manganese, tungsten, zirconium, zinc, or the like, are preferable. In particular, a copper ion is preferable. In addition, a cationic dye such as methyl violet, Bismarck brown, methylene blue, malachite green, or the like, an organic molecule having a cationic group such as a silicone modified with a quaternary nitrogen atom-containing group, or the like can also be employed. The valency of the ion is not particularly limited. For example, a monovalent to tetravalent positive ion can be employed.

As a supply source of the aforementioned metal ion, a metal salt can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, cesium chloride, indium (III) chloride, cerium (III) chloride, selenium tetrachloride, copper (II) chloride, manganese chloride, tungsten tetrachloride, tungsten oxydichloride, potassium tungstate, zirconium oxychloride, zinc chloride, barium carbonate, and the like. In addition, a metal hydroxide such as aluminum hydroxide, iron hydroxide, chromium hydroxide, and indium hydroxide; a hydroxide such as tungstosilicic acid; or oxides such as fat oxides, can also be employed.

Examples of the conductor or dielectric having a positive charge include conductors or dielectrics in which positive charges are generated, other than the aforementioned positive ions. As examples thereof, mention may be made of, for example, positive electrodes of batteries, formed from various conductors as described below, and dielectrics such as wool, nylon, and the like which are positively charged by friction.

The adhesion of contaminants having a positive charge to the surface of a substrate can be avoided by imparting a positive charge to the surface of the substrate as explained above. On the other hand, contaminants may include those which have a negative charge such as a chloride ion in tap water; those which originally had a positive charge but obtained a negative charge due to interaction (e.g., friction) with another substance; and those which have not only a positive charge but also a negative charge such as microorganisms like molds and plant cells such as pollens and algae. Contaminants having a negative charge easily adhere to the surface of a substrate having only a positive charge. Thus, the present invention imparts to the surface of a substrate not only a positive charge but also a negative charge, thereby preventing the contaminants having a negative charge from being adhered onto the surface of the substrate. Further, due to the electric potential difference of the negative and positive charges, the present invention can also reduce or prevent the proliferation of molds, algae or the like.

Contaminants consisting of dielectrics with a relatively small amount of positive or negative charge, such as silicone oil, may, depending on the type of the dielectrics, reverse the surface charge of the contaminants when strong positive or negative charge alone is present on the surface of a substrate, and therefore, they may adhere to the substrate surface. Therefore, by imparting both positive and negative charges, such possible adhesion can be avoided.

As a method for imparting a negative charge on the surface of a substrate, mention may be made of, for example, a method in which a negatively-charged substance selected from the group consisting of a negative ion; a conductor or dielectric having a negative charge; a composite formed from a conductor having a negative charge and a dielectric or a semiconductor; a substance having photocatalytic function; and a mixture thereof, is arranged on the surface of the substrate or in a surface layer of the substrate.

The aforementioned negative ion is not particularly restricted. As the negative ion, a halogenide ion such as fluoride ion, chloride ion and iodide ion; an inorganic ion such as a hydroxide ion, a sulfate ion, a nitrate ion, a carbonate ion; and an organic ion such as an acetate ion, may be mentioned. The valency of the ion is not particularly limited. For example, a monovalent to tetravalent negative ion can be employed.

As the conductor or dielectric having a negative charge, mention may be made of conductors or dielectrics in which negative charges are generated, other than the aforementioned negative ions. As examples thereof, mention may be made of, metals such as gold, silver and platinum; metal oxides; elements such as graphite, sulfur, selenium, and tellurium; sulfides such as arsenic sulfide, antimony sulfide, and mercury sulfide; clay, glass powder, quartz powder, asbestos, starch, cotton, silk, wool or the like; dye colloids such as prussian blue, aniline blue, eosin, naphtol yellow, or the like. Among these, colloids of metals such as gold, silver, and platinum, and of metal oxides, are preferable. Silver colloids are particularly preferable. Alternatively, negative electrodes of batteries, formed from various conductors as described below, and dielectrics such as halogens, fluorocarbon resins, vinyl chlorides, polyethylenes, and polyesters, as well as compounds and composites thereof which are negatively charged may be mentioned.

As a substance having photocatalytic function, a substance containing a specific metal compound and having a function of oxidizing and decomposing the organic and/or inorganic compounds on the surface of a substrate due to photoexcitation may be used. It is believed that the photocatalytic principle is that a specific metal compound produces radical species such as OH⁻ or O₂⁻ from oxygen or moisture in the air by means of photoexcitation, and the radical species oxidize-reduce-decompose the organic and/or inorganic compounds.

As the aforementioned metal compound, in addition to representative titanium oxide (TiO₂), ZnO, SrTiOP₃, CdS, CdO, CaP, InP, In₂O₃, CaAs, BaTiO₃, K₂NbO₃, Fe₂O₃, Ta₂O₅, WO₃, NiO, Cu₂O, SiC, SiO₂, MoS₃, InSb, RuO₂, CeO₂, and the like are known.

The substance having photocatalytic function may comprise a metal for improving photocatalytic effects (such as Ag or Pt). In addition, various substances such as metal salts or the like can be added within a range which does not deactivate the photocatalytic functions. As examples of the aforementioned metal salts, mention may be made of salts of metals such as aluminum, tin, chromium, nickel, antimony, iron, silver, cesium, indium, cerium, selenium, copper, manganese, calcium, platinum, tungsten, zirconium, zinc, or the like. In addition thereto, as some metals or non-metals, hydroxides or oxides thereof can also be employed. More particularly, examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, calcium chloride, platinum (II) chloride, tungsten tetrachloride, tungsten oxydichloride, potassium tungstate, gold chloride, zirconium oxychloride, zinc chloride, or the like. In addition, as compounds other than the metal salts, mention may be made of indium hydroxide, silicotungstic acid, silica sol, calcium hydroxide, or the like.

The aforementioned substance having photocatalytic function adsorbs, when excited, OH⁻ (hydroxide radical) or O₂⁻ (superoxide anion) from adsorbed water and oxygen on the surface of a substance, and therefore, it has a negative charge on its surface. If a positively-charged substance exists, the photocatalytic function will be reduced or lost, depending on the concentration of the positive charge. However, in the present invention, the substance having photocatalytic function does not need to exert oxidation decomposition effects on contaminants, and it can be used as a negatively-charged substance. By using a positively-charged substance together with the negatively-charged substance, the deterioration by oxidation decomposition of a binder (typically an inorganic or organic polymer) for the substance having photocatalytic function can be avoided. Thus, even when using a substance which has photocatalytic function and is fixed with a binder, by using it together with a positively-charged substance, contaminant preventing effects due to both positive and negative charges can be realized while controlling the deterioration of the binder.

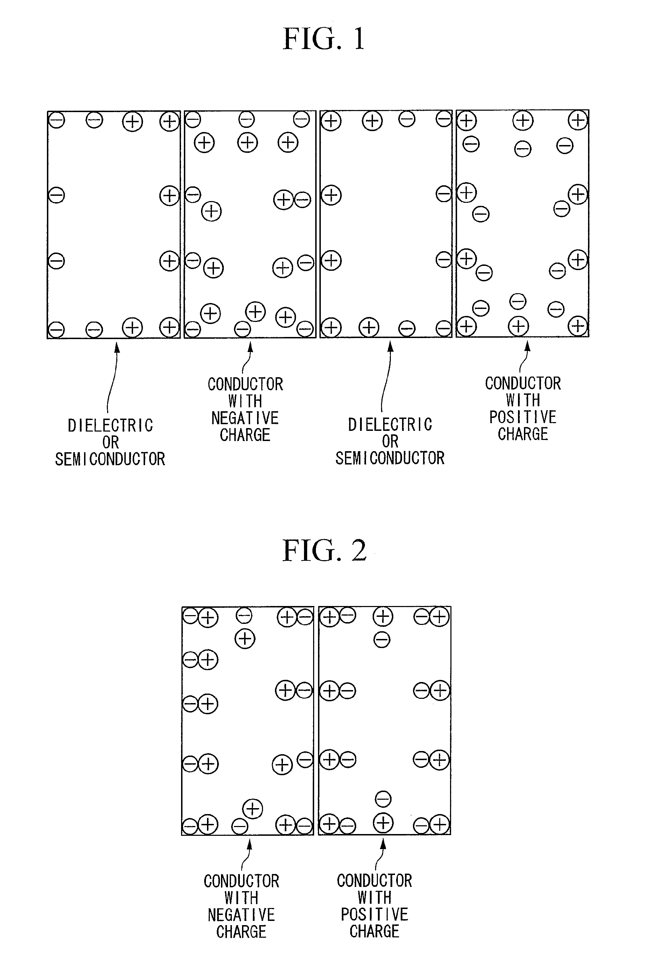

Next, the principle of imparting positive and negative charges to the surface of a substrate will be shown in FIG. 1.

FIG. 1 is a diagram showing a mechanism of imparting positive and negative charges employed in the present invention, in which a combination of (a dielectric or a semiconductor)-(a conductor having a negative charge)-(a dielectric or a semiconductor)-(a conductor having a positive charge) is arranged on the surface of a substrate or in a surface layer of the substrate, not shown in the drawing.

As the conductor having a negative charge and the conductor having a positive charge, those explained above can be used.

As shown in FIG. 1, the dielectric or semiconductor adjacent to the conductor having a negative charge is subjected to charge polarization by the effects of the charge conditions on the surface of the conductor. As a result, at the side of the dielectric or semiconductor adjacent to the conductor having a negative charge, a positive charge is produced, while at the side of the dielectric or semiconductor which is adjacent to the conductor having a positive charge, a negative charge is produced. Due to the aforementioned effects, the surface of the combination of (a dielectric or a semiconductor)-(a conductor)-(a dielectric or a semiconductor)-(a conductor) is positively and negatively charged, and if the number of the positive charge is the same as that of the negative charge, the surface of the substrate is maintained apparently electrically neutral. The size of the aforementioned composite (which means the length of the longest axis passing through the composite) of the conductor and the dielectric or semiconductor can range from 1 nm to 100 µm, and preferably ranges from 1 nm to 10 µm, more preferably ranges from 1 nm to 1 µm, and particularly preferably ranges from 1 nm to 100 nm.

FIG. 2 is a diagram showing another mechanism of imparting positive and negative charges onto the surface of a substrate or in a surface layer of the substrate.

In FIG. 2, a conductor having a negative charge and a conductor having a positive charge are adjacent to each other, and positive and negative charges are reduced due to contact disappearance. As the conductor having a negative charge and the conductor having a positive charge, those explained above can be used.

The conductor employed in the present invention is preferably a metal in view of durability. Examples thereof include metals such as aluminum, tin, cesium, indium, cerium, selenium, chromium, nickel, antimony, iron, silver, copper, manganese, platinum, tungsten, zirconium, zinc, or the like. In addition, a composite or alloy of the aforementioned metals can also be employed. The shape of the conductor is not particularly restricted. The conductor may be in any shape such as particles, flakes, fibers, or the like.

As the conductor, a metal salt of a certain metal can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, platinum (II) chloride, tungsten tetrachloride, tungsten oxydichloride, potassium tungstate, gold chloride, zirconium oxychloride, zinc chloride, iron lithium phosphate, and the like. In addition, a hydroxide or oxide such as indium hydroxide and tungstosilicic acid or the like can also be employed.

As the conductor, a conductive polymer such as polyaniline, polypyrrol, polythiophene, polythiophene vinylon, polyisothianaphthene, polyacetylene, polyalkyl pyrrol, polyalkyl thiophene, poly-p-phenylene, polyphenylene vinylon, polymethoxyphenylene, polyphenylene sulfide, polyphenylene oxide, polyanthrathene, polynaphthalene, polypyrene, polyazulene, or the like can also be employed.

As the semiconductor for the composite employed in the present invention, for example, C, Si, Ge, Sn, GaAs, Inp, GeN, ZnSe, PbSnTe, or the like, can be employed, and a semiconductor metal oxide, a photosemiconductor metal, or a photosemiconductor metal oxide can also be employed. Preferably, in addition to titanium oxide (TiO₂), ZnO, SrTiOP₃, CdS, CdO, CaP, InP, In₂O₃, CaAs, BaTiO₃, K₂NbO₃, Fe₂O₃, Ta₂O₃, WO₃, NiO, Cu₂O, SiC, SiO₂, MoS₃, InSb, RuO₂, CeO₂, or the like can be employed. A compound in which the photocatalytic effects are inactivated by Na or the like is preferable if used as the semiconductor.

As the dielectric for the composite employed in the present invention, barium titanate (PZT) which is a strong dielectric, so-called SBT, BLT, or a composite metal such as PZT, PLZT-(Pb,La) (Zr, Ti)O₃, SBT, SBTN-SrBi₂(Ta,Nb)₂O₉, BST-(Ba,Sr)TiO₃, LSCO-(La,Sr)CoO₃, BLT, BIT-(Bi,La)₄Ti₃O₁₂, BSO-Bi₂SiO₅, or the like can be employed. In addition, various weak dielectric materials such as a silane compound, a silicone compound, or a so-called organomodified silica compound, which is an organic silicon compound, or an organic polymer insulating film allylene ether-based polymer, benzocyclobutene, a fluorine-based polymer parylene N or F, a fluorinated amorphous carbon, or the like can also be employed.

As the composite formed from the conductor having a positive or negative charge and the dielectric or semiconductor, any combinations of the conductors and the dielectrics or the semiconductors can be employed as long as the composites can impart positive and negative charges on the surface of the substrate. In view of the self-cleaning properties of the surface of the substrate, a metal-doped titanium oxide is preferably employed. As the aforementioned metal, at least one metal element selected from the group consisting of gold, silver, platinum, copper, manganese, nickel, cobalt, iron, and zinc can be employed. At least two of them are preferable. In particular, silver and copper are preferable. As a titanium oxide, various oxides and peroxides such as TiO₂ TiO₃, TiO, TiO₃/nH₂O, and the like can be employed. In particular, titanium peroxide having a peroxy group is preferable. The titanium oxide may be amorphous-type, anatase-type, brookite-type, or rutile-type. These types may be mixed. Amorphous-type titanium oxide is preferable.

Amorphous-type titanium oxide does not have photocatalytic effects. In contrast, anatase-type, brookite-type, and rutile-type titanium oxides exhibit photocatalytic effects, but if copper, manganese, nickel, cobalt, iron or zinc, at a certain concentration, is compounded therewith, the aforementioned photocatalytic effects are lost. Therefore, the aforementioned metal-doped titanium oxides exhibit no photocatalytic effects. Amorphous-type titanium oxide can be converted into anatase-type titanium oxide over time by means of heating by sunlight, or the like. However, when copper, manganese, nickel, cobalt, iron or zinc is compounded therewith, the aforementioned photocatalytic effects are lost. As a result, the aforementioned metal-doped titanium oxide exhibits no photocatalytic effects over time. On the other hand, titanium oxides in which gold, silver or platinum is doped show photocatalytic properties when the titanium oxides are converted from amorphous to anatase-type. However, when a certain amount of positively-charged substance coexists therewithin, photocatalytic properties are not exhibited. Thus, the aforementioned metal-doped titanium oxides exhibit no photocatalytic effects over time.

As a method for manufacturing the aforementioned metal-doped titanium oxide, a manufacturing method based on a hydrochloric acid method or sulfuric acid method which is a general method for manufacturing titanium dioxide powders may be employed, or a manufacturing method using any of various liquid-dispersed titania solutions may be employed. The aforementioned metal can form a composite with titanium oxide in any step of the manufacturing method.

For example, examples of a method for manufacturing the aforementioned metal-doped titanium oxide include the first to third manufacturing methods described below, and a sol-gel method which is conventionally known.

### First Manufacturing Method

First, a compound of tetravalent titanium such as titanium tetrachloride or the like and a base such as ammonia or the like are reacted together to form titanium hydroxide. Subsequently, the aforementioned titanium hydroxide is peroxidized with an oxidizing agent to form ultra-fine particles of amorphous-type titanium peroxide. The aforementioned reaction is preferably carried out in an aqueous medium. In addition, if a heating treatment is further carried out, the amorphous-type titanium peroxide can be converted into anatase-type titanium peroxide. In one of the aforementioned steps, at least one of gold, silver, platinum, copper, manganese, nickel, cobalt, iron, zinc, and compounds thereof is mixed therein.

The oxidizing agent for use in peroxidation is not particularly restricted. Various oxidizing agents can be employed as long as a peroxide of titanium, that is, titanium peroxide, can be produced. Hydrogen peroxide is preferable. In the case of employing an aqueous solution of hydrogen peroxide as an oxidizing agent, the concentration of hydrogen peroxide is not particularly limited. A concentration thereof ranging from 30 to 40% is preferable. Before the peroxidation reaction is carried out, the titanium hydroxide is preferably cooled. The cooling temperature preferably ranges from 1 to 5°C.

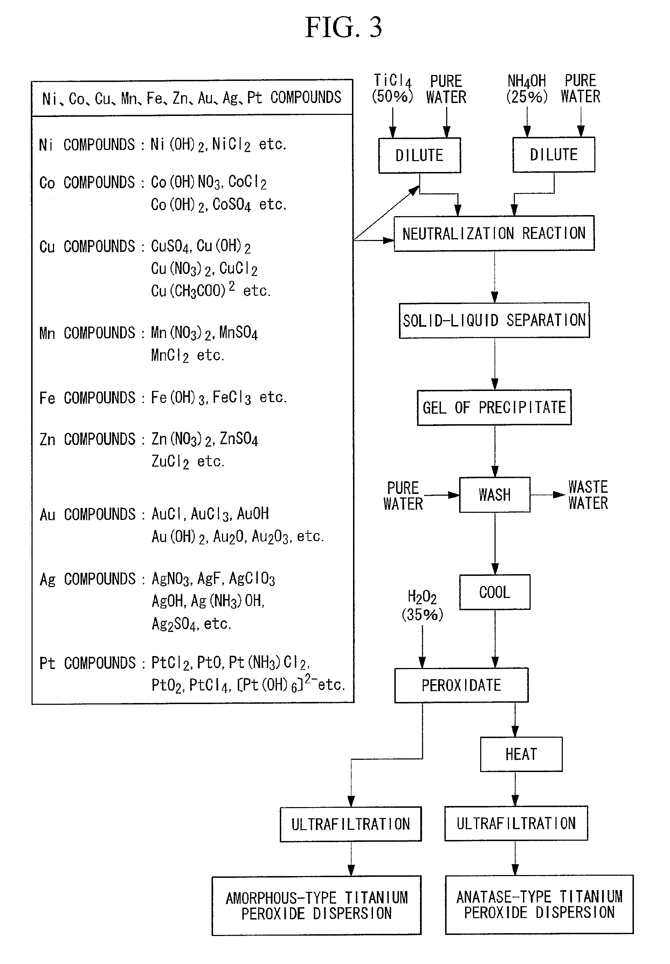

One example of the aforementioned first manufacturing method is shown in FIG. 3. In the manufacturing method shown therein, an aqueous solution of titanium tetrachloride and aqueous ammonia are mixed together in the presence of at least one of the compounds of gold, silver, platinum, copper, manganese, nickel, cobalt, iron, or zinc, and thereby a mixture of a hydroxide of the aforementioned metal and a hydroxide of titanium is produced. Here, there are no particular limitations on the concentration or temperature of the reaction mixture, but the reaction is preferably carried out in a dilute solution at room temperature. The aforementioned reaction is a neutralization reaction, and therefore, it is preferable to finally adjust the pH of the reaction mixture to approximately pH 7.

The hydroxides of the metal and titanium obtained above are washed with purified water, followed by cooling to approximately 5°C. Subsequently, the hydroxides are peroxidized with an aqueous solution of hydrogen peroxide. Thereby, an aqueous dispersion containing fine particles of amorphous-type titanium oxide having a peroxy group which is doped with a metal, i.e. an aqueous dispersion containing a metal-doped titanium oxide, can be produced.

### Second Manufacturing Method

A compound of tetravalent titanium such as titanium tetrachloride or the like is peroxidized with an oxidizing agent, and the peroxidized product is reacted with a base such as ammonia or the like to form ultra-fine particles of amorphous-type titanium peroxide. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of gold, silver, platinum, copper, manganese, nickel, cobalt, iron, zinc, and compounds thereof is mixed therein.

### Third Manufacturing Method

A compound of tetravalent titanium such as titanium tetrachloride or the like is reacted together with an oxidizing agent and a base to carry out formation of titanium hydroxide and peroxidation thereof at the same time, and thereby, ultra-fine particles of amorphous-type titanium peroxide are formed. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of gold, silver, platinum, copper, manganese, nickel, cobalt, iron, zinc, and compounds thereof is mixed therein.

Needless to say, in the first to third manufacturing methods, a mixture of the amorphous-type titanium peroxide and the anatase-type titanium peroxide obtained by heating the aforementioned amorphous-type titanium peroxide can be employed as a metal-doped titanium oxide.

### Manufacturing Method Using Sol-Gel Method

A solvent such as water, an alcohol, or the like, and an acid or base catalyst are mixed and stirred with a titanium alkoxide to hydrolyze the titanium alkoxide. As a result, a sol solution of ultra-fine particles of titanium oxide is produced. Before or after the hydrolysis step, at least one of gold, silver, platinum, copper, manganese, nickel, cobalt, iron, zinc, and compounds thereof is mixed therein. The titanium oxide obtained above is an amorphous-type titanium oxide having a peroxy group.

As the aforementioned titanium alkoxide, a compound represented by the general formula: Ti(OR')₄, wherein R' is an alkyl group, or a compound in which one or two of the alkoxide groups (OR') in the aforementioned general formula have been substituted with carboxyl groups or beta-dicarbonyl groups, or a mixture thereof is preferable.

Specific examples of the aforementioned titanium alkoxide include Ti(O-iso-C₃H₇)₄, Ti(O-n-C₄H₉)₄, Ti(O-CH₂CH(C₂H₅)C₄H₉)₄, Ti(O-C₁₇H₃₅)₄, Ti(O-iso-C₃H₇)₂[CO(CH₃)CHCOCH₃]₂, Ti (O-nC₄H₉)₂[OC₂H₄N(C₂H₄OH)₂]₂, Ti(OH)₂[OCH(CH₃)COOH]₂, Ti(OCH₂CH(C₂H₅)CH(OH)C₃H₇)₄, and Ti(O-nC₄H₉)₂(OCOC₁₇H₃₅), and the like.

### Compound of Tetravalent Titanium

As the compound of tetravalent titanium employed in the manufacture of the metal-doped titanium oxide, various titanium compounds can be employed as long as titanium hydroxide, also known as ortho-titanic acid (H₄TiO₄), can be formed upon reacting with a base. Examples thereof include titanium salts of water-soluble inorganic acids such as titanium tetrachloride, titanium sulfate, titanium nitrate, and titanium phosphate. Other examples include titanium salts of water-soluble organic acids such as titanium oxalate, or the like. Among the various titanium compounds described above, titanium tetrachloride is preferable since superior water solubility is exhibited, and there are no remaining components other than titanium in the dispersion of a metal-doped titanium oxide.

In addition, in the case of employing a solution of a compound of tetravalent titanium, the concentration of the aforementioned solution is not particularly limited as long as a gel of titanium hydroxide can be formed, but a relatively dilute solution is preferable. Specifically, the concentration of the compound of tetravalent titanium preferably ranges from 5 to 0.01% by weight, and more preferably ranges from 0.9 to 0.3% by weight.

### Base

As a base to be reacted with the aforementioned compound of tetravalent titanium, various bases can be employed as long as titanium hydroxide can be formed by reacting with the compound of tetravalent titanium. Examples thereof include ammonia, sodium hydroxide, sodium carbonate, potassium hydroxide, or the like. Ammonia is preferable.

In addition, in the case of employing a solution of the aforementioned base, the concentration of the aforementioned solution is not particularly limited as long as a gel of titanium hydroxide can be formed, but a relatively dilute solution is preferable. Specifically, the concentration of the basic solution preferably ranges from 10 to 0.01% by weight, and more preferably ranges from 1.0 to 0.1% by weight. In particular, in the case of employing aqueous ammonia as the basic solution, the concentration of ammonia preferably ranges from 10 to 0.01% by weight, and more preferably ranges from 1.0 to 0.1% by weight.

### Metal Compound

As examples of compounds of gold, silver, platinum, copper, manganese, nickel, cobalt, iron, or zinc, mention may be made of the compounds described below.
Au compounds: AuCl, AuCl₃, AuOH, Au(OH)₂, Au₂O, Au₂O₃
Ag compounds: AgNO₃, AgF, AgClO₃, AgOH, Ag(NH₃)OH, Ag₂SO₄
Pt compounds: PtCl₂, PtO, Pt(NH₃)Cl₂, PtO₂, PtCl₄, [Pt(OH)₆]²⁻
Ni compounds: Ni(OH)₂, NiCl₂
Co compounds: Co(OH)NO₃, Co(OH)₂, CoSO₄, CoCl₂
Cu compounds: Cu(OH)₂, Cu(NO₃)₂, CuSO₄, CuCl₂, Cu(CH₃COO)₂
Mn compounds: MnNO₃, MnSO₄, MnCl₂
Fe compounds: Fe(OH)₂, Fe(OH)₃, FeCl₃
Zn compounds: Zn(NO₃)₂, ZnSO₄, ZuCl₂

The concentration of titanium peroxide in the aqueous dispersion obtained in accordance with the first to third manufacturing methods (the total amount including coexisting gold, silver, platinum, copper, manganese, nickel, cobalt, iron or zinc) preferably ranges from 0.05 to 15% by weight, and more preferably ranges from 0.1 to 5% by weight. In addition, regarding the content of gold, silver, platinum, copper, manganese, nickel, cobalt, iron, or zinc, the molar ratio of titanium and the aforementioned metal component is preferably 1:1 in the present invention. In view of stability of the aqueous dispersion, the ratio preferably ranges from 1:0.01 to 1:0.5, and more preferably ranges from 1:0.03 to 1:0.1.

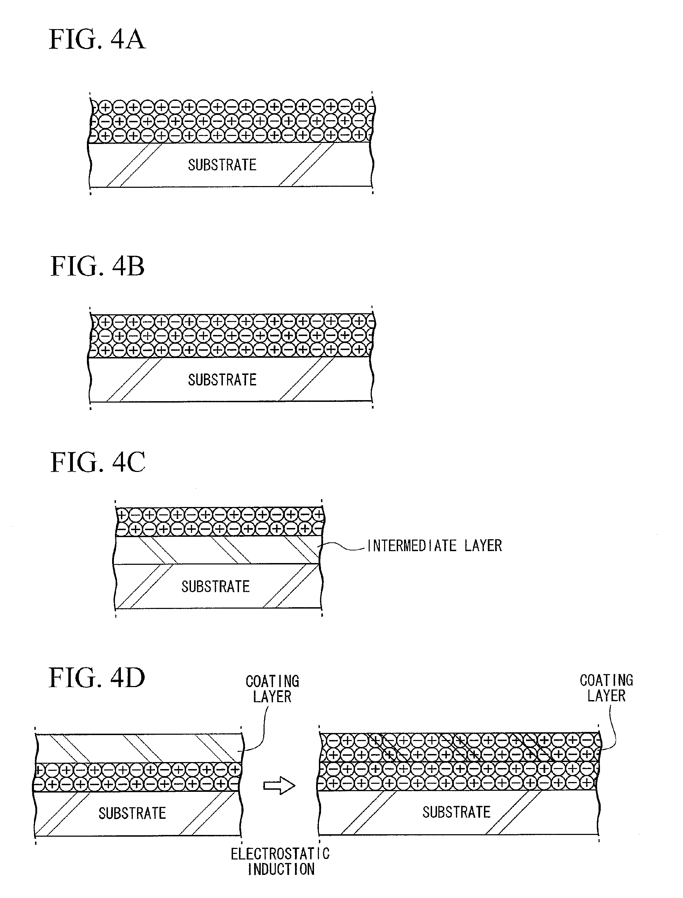

FIG. 4 shows some modes of imparting positive and negative charges to the surface of a substrate.

FIG. 4A shows a mode in which a layer consisting of positively-charged and negatively-charged substances is arranged on the surface of a substrate. The thickness of the layer is not limited, but is preferably in the range of 10nm to 1µm, and more preferably in the range of 10nm to 100nm.

The arrangement of positively-charged and negatively-charged substances shown in FIG. 4A can be formed by, for example, sputtering, flame gunning, ion plating (cathodic arc discharge mode), CVD coating, and electrodeposition coating. Alternatively, it can be formed by a dip coating method by immersing the substrate in a solution, suspension, or emulsion of the above substances, or by, for example, applying the solution, suspension, or emulsion to the substrate at least once with a spray, a roll, a brush, a sponge or the like, and subsequently drying to evaporate the solvent or medium therein.

The arrangement of the positively-charged and negatively-charged substances shown in FIG. 4A can be obtained on a substrate by mixing a positive ion-including solution including, for example, a copper ion or the like with a dispersion of a conductor having a negative charge such as a silver colloid, followed by dipping the substrate into the mixture liquid, and drying after dipping; or by mixing a dispersion of amorphous titanium oxide doped with metal such as copper, nickel, cobalt, manganese, iron, zinc or the like with a dispersion of amorphous titanium oxide doped with silver, gold, platinum, or the like, followed by applying the mixture liquid onto the substrate, and drying after applying.

FIG. 4B shows a mode of forming a layer comprising positively-charged and negatively-charged substances, as well as one or more other components, on the surface of a substrate. The thickness of the layer is not limited, but is preferably in the range of 10nm to 1µm, and more preferably in the range of 10nm to 100nm.

The arrangement of the positively-charged and negatively-charged substances shown in FIG. 4B can be formed, for example, by dip coating or immersing a substrate in a solution, suspension, or emulsion of the above substances, or by applying the solution, suspension, or emulsion to the substrate at least once with a spray, a roll, a brush, a sponge or the like, and subsequently drying after applying.

In order to promote dispersion of the positively-charged and negatively-charged substances in the layer, as the other components, various surfactants or dispersants are preferably blended together with the positively-charged and negatively-charged substances. The amount of the surfactants or dispersants may be from 0.001 to 1.0wt%, preferably from 0.1 to 1.0wt%, relative to the total amount of the positively-charged and negatively-charged substances.

As the surfactants or dispersants, various organic silicon compounds can be employed. As the organic silicon compounds, various silane compounds, and various silicone oils, silicone gums, and silicone resins can be employed. One having an alkyl silicate structure or a polyether structure, or one having both an alkyl silicate structure and a polyether structure, in the molecule thereof, is preferable.

Here, the alkylsilicate structure refers to a structure in which alkyl groups are bonded to silicon atoms in the siloxane backbone. On the other hand, as examples of the polyether structure, mention may be made of molecular structures such as polyethylene oxide, polypropylene oxide, polytetramethylene oxide, a block copolymer of polyethylene oxide and polypropylene oxide, a copolymer of polyethylene and polytetramethylene glycol, or a copolymer of polytetramethylene glycol and polypropylene oxide, although there is no limitation thereto. Among these, a block copolymer of polyethylene oxide and polypropylene oxide is particularly suitable in view of the ability to control the wettability by the degree of blocking or the molecular weight.

An organic substance having both an alkylsilicate structure and a polyether structure in the molecule thereof is particularly preferable. Specifically, a polyether-modified silicone such as polyether-modified polydimethylsiloxane or the like is suitable. The polyether-modified silicone can be manufactured using a generally known method, for example, using the method described in Synthesis Example 1, 2, 3 or 4 in Japanese Unexamined Patent Application, First Publication No. H04-242499 or the Reference Example in Japanese Unexamined Patent Application, First Publication No. H09-165318. In particular, a polyethylene oxide-polypropylene oxide block copolymer-modified polydimethylsiloxane obtained by reacting a block copolymer of both-end-metallyl polyethylene oxide-polypropylene oxide with dihydropolydimethylsiloxane is suitable.

Specifically, TSF4445 or TSF4446 (both manufactured by GE Toshiba Silicones Co., Ltd.), SH200 (manufactured by Dow Corning Toray Silicone Co., Ltd.), KP series (manufactured by Shin-Etsu Chemical Co., Ltd.), DC3PA or ST869A (both manufactured by Dow Corning Toray Silicone Co., Ltd.), or the like can be employed. They are additives for paints, and can be employed as appropriate, as long as the aforementioned properties can be imparted.

The arrangement of the positively-charged and negatively-charged substances shown in FIG. 4B can be obtained on a substrate by mixing a positive ion-including solution including, for example, a copper ion or the like with a dispersion of a conductor having a negative charge such as a silver colloid, as well as polyether-modified silicone in an amount of 0.01 to 1.0% relative to the total weight of both the solution and the dispersion, followed by dipping the substrate into the mixture liquid, and drying after dipping; or by mixing a dispersion of amorphous titanium oxide doped with metal such as copper, nickel, cobalt, manganese, iron, zinc or the like with a dispersion of amorphous titanium oxide doped with silver, gold, platinum, or the like, followed by adding polyether-modified silicone in an amount of 0.01 to 1.0% relative to the total weight of both dispersions, applying the mixture onto the substrate, and drying after applying.

If the other component(s) constitute(s) a substrate, the arrangement shown in FIG. 4B can be obtained by, for example, mixing a specified amount of the positively-charged and negatively-charged substances, which have a higher or lower specific gravity than that of the liquid to be cured of the substance forming the substrate, with the liquid to be cured in a casting mold, and subsequently allowing it to stand for a specified period to cure the aforementioned liquid. In the case of coating the substrate, the aforementioned positively-charged and negatively-charged substances may be contained in the coating material.

As the other component(s), various additives such as an IR absorber or reflector, a UV absorber or reflector, and an electromagnetic wave shielding agent may be used. The positively-charged and negatively-charged substances may be contained in a film which is formed with the above additive alone. In this case, the amount of the additive is determined in consideration of the compatibility with the positively-charged or negatively-charged substances.

FIG. 4C shows a mode of forming an intermediate layer between the surface of a substrate and a layer of the positively-charged and negatively-charged substances.

FIG. 4D shows a mode of forming a coating layer on the layer of positively-charged and negatively-charged substances on the surface of a substrate. In this case, due to electrostatic induction, the electric distribution which is the same as that of the layer of the positively-charged and negatively-charged substances can be formed on the coating layer.

The intermediate layer can be formed from various types of organic or inorganic substances which can impart hydrophilic properties or hydrophobic properties or water repellent properties or oil repellent properties to the substrate.

As examples of hydrophilic organic substances, mention may be made of polyethers such as polyethylene glycol, polypropylene glycol, a block copolymer formed from polyethylene glycol and polypropylene glycol, and the like; polyvinyl alcohols; polyacrylic acids (including salts such as alkali metal salts, ammonium salts and the like), polymethacrylic acids (including salts such as alkali metal salts, ammonium salts and the like), or a copolymer formed from polyacrylic acid and polymethacrylic acid (including salts such as alkali metal salts, ammonium salts and the like); polyacrylamides; polyvinyl pyrrolidones; hydrophilic celluloses such as carboxymethylcellulose (CMC), methylcellulose (MC), and the like; natural hydrophilic polymer compounds such as polysaccharide and the like; and the like. Composite products formed by blending inorganic dielectrics such as silica, glass fibers, carbon fibers, and the like in the aforementioned polymer materials can also be employed. In addition, as the aforementioned polymer materials, coating materials can also be employed.

As examples of hydrophilic inorganic materials, mention may be made of, for example, SiO₂, and other silicon compounds.

As examples of water-repellent organic substances, mention may be made of polyolefins such as polyethylene, polypropylene, polystyrene, and the like; acrylic resins such as polyacrylate, acrylonitrile/styrene copolymer (AS), acrylonitrile/butadiene/styrene copolymer (ABS), and the like; polyacrylonitriles; polyhalogenated vinyls such as polyvinyl chloride, polyvinylidene chloride, and the like; fluorine resins such as polytetrafluoroethylene, fluoroethylene/propylene copolymer, polychlorotrifluoroethylene (PCTFE), polyvinylidene fluoride (PVDF), fluorinated vinylidene/trifluoroethylene copolymer, and the like; polyesters such as polyethylene terephthalate, polycarbonate, and the like; phenolic resins; urea resins; melamine resins; polyimide resins; polyamide resins such as nylon and the like; epoxy resins; polyurethanes; and the like.

As the water-repellent organic substance, a fluorine resin is preferable, and in particular, fluorinated vinylidene/trifluoroethylene copolymers having strong dielectric properties and water-repellent properties, β-type crystals of polyvinylidene fluoride, and those containing the same are preferable. As the fluorine resins, commercially available products can be used. As examples of the commercially available products, mention may be made of, for example, HIREC 1550 manufactured by NTT-AT Co., Ltd., and the like.

In addition, a fluorine resin emulsion comprising a surfactant and at least one fluorine resin selected from the group consisting of copolymers formed from two or more types of olefins containing fluorine atoms, copolymers between olefins containing fluorine atoms and hydrocarbon monomers, and mixtures of copolymers formed from two or more types of olefins containing fluorine atoms and thermoplastic acrylic resins, as well as a curing agent (see Japanese Unexamined Patent Application, First Publication No. H05-124880; Japanese Unexamined Patent Application, First Publication No. H05-117578; and Japanese Unexamined Patent Application, First Publication No. H05-179191) and/or a composition comprising the aforementioned silicone resin-based water repellent (see Japanese Unexamined Patent Application, First Publication No. 2000-121543; and Japanese Unexamined Patent Application, First Publication No. 2003-26461) can also be employed. As the aforementioned fluorine resin emulsion, a commercially available product can be used, such as the ZEFFLE series available from Daikin Industries, Ltd., and the LUMIFLON series available from Asahi Glass Co., Ltd. As the aforementioned curing agent, a melamin-based curing agent, an amine-based curing agent, a polyvalent isocyanate-based curing agent, and a block polyvalent isocyanate-based curing agent are preferably employed.

As examples of water-repellent inorganic materials, mention may be made of, for example, silane-based, siliconate-based, silicone-based, or silane composite-based, or fluorine-based water-repellent agents or water absorption inhibitors, and the like. In particular, a fluorine-based water-repellent agent is preferable, and examples thereof include a fluorine-containing compound such as a compound containing a perfluoroalkyl group or the like, or a composition containing a fluorine-containing compound. When a fluorine-containing compound having increased adherence to the surface of the substrate is selected, after applying it to the surface of the substrate, it is not always necessary that the chemical components of the water repellent agent or the water-absorption inhibitor react with the substrate, and a chemical bond may be formed, or the chemical components may crosslink with each other.

The fluorine-containing compound which can be employed as the aforementioned fluorine-based water-repellent agent is preferably one containing a perfluoroalkyl group in a molecule and having a molecular weight ranging from 1,000 to 20,000. As examples thereof, mention may be made of perfluorosulfonate, perfluorosulfonic acid ammonium salt, perfluorocarboxylate, perfluoroalkyl betaine, perfluoroalkyl ethylene oxide adduct, perfluoroalkyl amine oxide, perfluoroalkyl phosphate, perfluoroalkyl trimethylammonium salt, and the like. Among these, perfluoroalkyl phosphate and perfluoroalkyl trimethylammonium salt are preferable since they exhibit superior properties of adhering to the surface of the substance. These materials are commercially available as SURFLON S-112 and SURFLON S-121 (both product names, manufactured by Seimi Chemical Co., Ltd.) and the like.

In the case of using a substrate having high water-absorbability, an intermediate layer containing a silane compound is preferably preliminarily formed on the substrate and below the layer of the positively-charged and negatively-charged substances. The intermediate layer includes a large amount of Si-O bonds, and for this reason, it is possible to improve the strength of the layer of the positively-charged and negatively-charged substances or the adhesiveness with the substrate. In addition, the aforementioned intermediate layer also exhibits a function of preventing moisture from seeping into the substrate.

Examples of the aforementioned silane compounds include a hydrolyzable silane, a hydrolysate thereof, and a mixture of these. As the hydrolyzable silane, various alkoxysilanes can be employed. Examples thereof include a tetraalkoxysilane, an alkyltrialkoxysilane, a dialkyldialkoxysilane, or a trialkylalkoxysilane. Among these, one type of hydrolyzable silane may be employed alone or two or more types of hydrolyzable silanes may be employed in combination. In addition, various organopolysiloxanes may be added to the aforementioned silane compounds. As an agent for forming an intermediate layer containing the silane compound, DRYSEAL S (manufactured by Dow Corning Toray Silicone Co., Ltd.) may be mentioned.

In addition, as the component for forming an intermediate layer, a silicone resin which is curable at room temperature, such as a methylsilicone resin, a methylphenylsilicone resin, or the like may be employed. As examples of a silicone resin which is curable at room temperature, mention may be made of AY42-170, SR2510, SR2406, SR2410, SR2405, and SR2411 (all manufactured by Dow Corning Toray Silicone Co., Ltd.).

The intermediate layer and coating layer may be colorless and transparent, or colored and transparent, translucent, or opaque. Here, "colored" means not only a colored layer which is red, blue, or green, or the like, but also a white layer. In order to obtain a colored intermediate layer and coating layer, various coloring agents such as inorganic or organic pigments, dyes, or the like are preferably blended in the intermediate layer and coating layer.

Examples of inorganic pigments include carbon black, black lead, yellow lead, yellow iron oxide, red lead oxide, red iron oxide, ultramarine blue, chromic oxide green, iron oxide, or the like. As organic pigments, azo-based organic pigments, phthalocyane-based organic pigments, threne-based organic pigments, quinacridone-based organic pigments, dioxazine-based organic pigments, isoindolinone-based organic pigments, diketopyrolopyrrole, various metal complexes, or the like can be employed, and organic pigments exhibiting superior light resistance are preferable. Examples of organic pigments exhibiting light resistance include, for example, Hansa Yellow or Toluidine Red which are insoluble azo-based organic pigments, Phthalocyanine Blue B or Phthalocyanine Green which are phthalocyane-based organic pigments, Quinacridone Red which is a quinacridone-based organic pigment, or the like.

Examples of dyes include basic dyes, direct dyes, acidic dyes, vegetable dyes or the like. Dyes exhibiting superior light resistance are preferable. For example, direct scarlet red, roccellin, or azo rubine, as red; direct orange R conc, or acid orange as orange; chrysophenine NS, or methanil yellow, as yellow; direct brown KGG, or acid brown R, as brown; direct blue B as blue; direct black GX, or nigrosine BHL as black; or the like are particularly preferable.

When the intermediate layer and coating layer are formed from a silane compound or a silicone resin, the mixing ratio (weight ratio) of the silane compound or silicone resin to the pigment preferably ranges from 1:2 to 1:0.05, and more preferably ranges from 1:1 to 1:0.1.

In the intermediate layer and coating layer, an additive such as a dispersant, a stabilizer, a leveling agent, or the like may be blended. The aforementioned additives have effects of facilitating the formation of the intermediate layer and coating layer. In addition, when a colorant such as a pigment, a dye, or the like is blended, it is also possible to add a binder for assisting the fixing of the aforementioned colorant. As the binder in the aforementioned case, various binders for use in paints having acrylic esters or acrylate copolymer resins as main ingredients and exhibiting superior weather resistance can be employed. Examples thereof include POLYSOL AP-3720 (manufactured by Showa Highpolymer Co., Ltd.), POLYSOL AP-609 (manufactured by Showa Highpolymer Co., Ltd.), or the like.

As a method for forming an intermediate layer and a coating layer on the substrate, any known methods can be employed. For example, spray coating, dip coating, flow coating, spin coating, roll coating, brush coating, sponge coating, or the like can be employed. In order to improve physical properties such as hardness of the intermediate layer and coating layer, adhesiveness with another substance, or the like, after the intermediate layer and coating layer are formed on the substrate, heating is preferably carried out at a temperature which is within an acceptable range.

The thickness of the intermediate layer and coating layer formed on the substrate as described above is not particularly limited, and preferably ranges from 0.01µm to 100µm, and more preferably ranges from 0.05µm to 50µm, and most preferably ranges from 0.1µm to 10µm.

In FIGS. 4C and 4D, either of an intermediate layer or a coating layer is formed. However, both an intermediate layer and a coating layer can be formed.

For the sake of convenience, in FIG. 4, a plurality of sublayers of positively-charged and negatively-charged substances are arranged. However, a single layer may be arranged. The thickness of each layer preferably ranges from 0.01µm to 2.0µm, and more preferably ranges from 0.03µm to 1.0µm. In addition, the layer of the positively-charged and negatively-charged substances is not necessarily a continuous layer as shown in FIG. 4, and may be a discontinuous layer. In addition, the positively-charged and negatively-charged substances may be arranged on a substrate as clusters (aggregates of charged substances) by means of discontinuous dispersal.

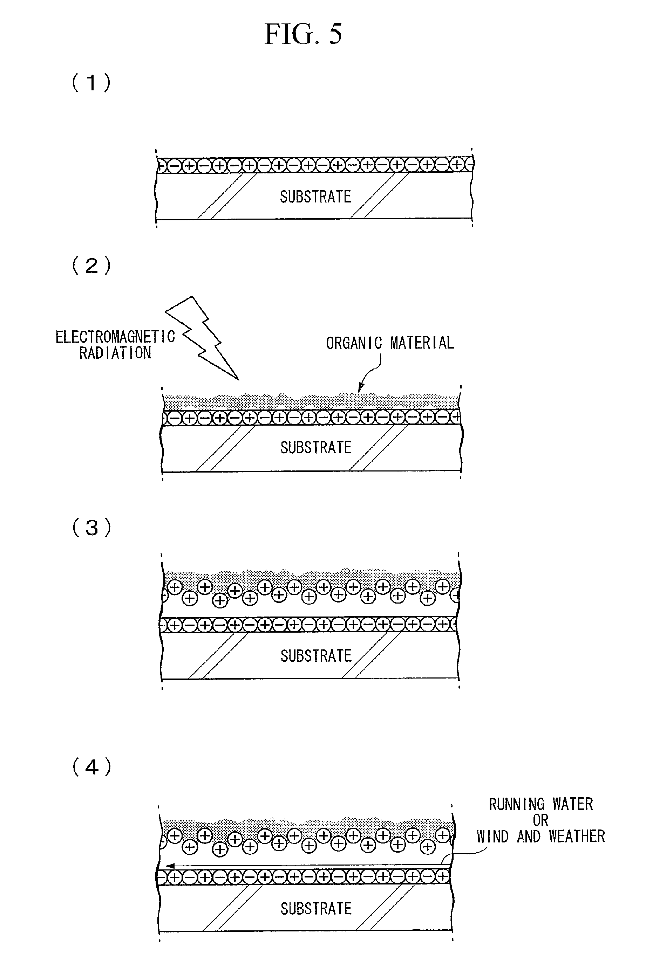

Next, a mechanism of removal of contaminants from the surface of the substrate which is positively charged is shown in FIG. 5. For the sake of convenience, in FIG. 5, a single layer of positively-charged and negatively-charged substances is arranged. However, a plurality of layers may be arranged.

First, as shown in FIG. 5, positive and negative charges are provided on the surface of the substrate (see FIG. 5 (1)).

Contaminants are deposited on the surface of the substrate, followed by photooxidizing by means of the effects of electromagnetic radiation such as sunlight or the like. Thereby, a positive charge is also provided to the contaminants (FIG. 5 (2)).

Electrostatic repulsion of positive charges between the surface of the substrate and the contaminants is produced, and repulsion power acts on the contaminants. Thereby, the fixing power of the contaminants to the surface of the substrate is reduced (FIG. 5 (3)).

By means of physical effects such as wind and weather, the contaminants are easily removed from the substrate (FIG. 5 (4)). Thereby, the substrate can be self-cleaned.

Since there are negative charges as well on the surface of the substrate, contaminants or contaminant-inducing substances having a negative charge such as kaolinite, clay powder, chloride ions or the like can also be repelled and the fixing power thereof to the surface of the substrate is reduced.

The substrate of the present invention is not particularly limited. Various hydrophilic or hydrophobic inorganic substrates and organic substrates or combinations thereof can be employed.

Examples of an inorganic substrate include, for example, substrates formed from substances of transparent or opaque glass such as soda lime glass or the like, metal oxides such as zirconia or the like, ceramics, concrete, mortar, stone, metals or the like. In addition, examples of an organic substrate include, for example, substrates formed from substances such as organic resins, wood, paper, or the like. As detailed examples of the organic resins, mention may be made of, for example, polyethylene, polypropylene, polycarbonate, acrylic resins, polyester such as PET or the like, polyamide, polyurethane, ABS resins, polyvinyl chloride, silicone, melamine resins, urea resins, silicone resins, fluorine resins, cellulose, epoxy-modified resins, or the like.

The shape of the substrate is not particularly limited, and any shape such as cubics, cuboids, spheres, sheets, fibers, or the like can be employed. In addition, the substrate may be porous. The surface of the substrate may be subjected to a hydrophilic treatment such as a corona discharge treatment, a UV exposure treatment, or the like. As the substrate, basal plates or sealing materials for use in architecture or civil engineering, bodies for use in carrying devices or equipments, and display screens are suitable.

The surface of the substrate may be coated with paint. As the coating material, so-called paint containing a colorant and a synthetic resin such as an alkyd resin, an acrylic resin, an amino resin, a polyurethane resin, an epoxy resin, a silicone resin, a fluorine resin, an acrylic silicone resin, an unsaturated polyester resin, an ultraviolet-curable resin, a phenol resin, a vinyl chloride resin, or a synthetic resin emulsion can be preferably employed.

The thickness of the aforementioned coating film preferably ranges from 0.01 µm to 100 µm, more preferably ranges from 0.1 µm to 50 µm, and in particular, preferably ranges from 0.5 µm to 10 µm. In addition, as a method for coating, for example, a spray coating method, a dip coating method, a flow coating method, a spin coating method, a roll coating method, a brush coating method, a sponge coating method, or the like can be employed. In addition, in order to improve physical properties such as hardness of the coating film, adhesiveness with the substrate, and the like, heating is preferably carried out within a range acceptable for the substrate and the coating film.

Conventionally, protection of the surface of a substrate was carried out by coating the surface of the substrate with an organic or inorganic substance having superior water repellent properties or oil repellent properties, or hydrophilic properties or hydrophobic properties. However, the aforementioned organic or inorganic substance generally possesses a negative charge. For this reason, there is a problem in that contaminants adhere to the surface over time and the protective properties are remarkably impaired. In contrast, in the present invention, positive and negative charges are imparted to the surface of the substrate, and for this reason, the problem described above can be eliminated. In addition, while the properties of the organic or inorganic substance are maintained, self-cleaning properties can be imparted, since the chemical properties of the surface of the substrate are not impaired.

Therefore, in the present invention, by utilizing the positive and negative charges provided on the surface of the substrate, a product can be produced in which the functions of the substrate itself are exhibited, and at the same time, "functions of preventing contamination and preventing fogging" are exhibited. This technology can be applied to any substrate. In particular, by providing positive and negative charges on the surface of an organic substance having superior water repellent properties or hydrophilic properties, the functions thereof can be maintained for a long time, and for this reason, application to a substrate formed from plastics is preferable. Thereby, "clean plastics" can be provided.

In addition, the positive charges of the surface of the substrate can reduce oxidative degradation of the substrate due to electromagnetic radiation. In other words, oxidative degradation of the substrate is caused by the production of radicals such as ¹O₂, ^{·}OH, or the like by means of electromagnetic radiation such as ultraviolet radiation or the like on the surface of the substrate or in the substrate, which causes an oxidative decomposition reaction. The positively charged surface of the substrate can make these radicals stable molecules. Therefore, it is believed that oxidative deterioration of the substrate may be prevented or reduced. When the substrate is made of a metal, occurrences of rust can be reduced by the same processes as described above.

The present invention can be utilized in any field in which various design properties and increased water resistance and contamination resistance are required. The present invention is suitably employed in the manufacturing of many artificial materials utilized outside, such as building materials; outdoor air conditioners; kitchen instruments; hygiene instruments; lighting apparatuses; automobiles; bicycles; two-wheeled motor vehicles; airplanes; trains; boats and ships; or the like, or face panels of various machines, electronics, televisions, or the like, manufactured from glass, metals, ceramics, concrete, timber, stone materials, polymer resin covers, polymer resin sheets, fibers (clothes, curtains, and the like), sealants, or the like, or a combination thereof. In particular, the present invention is preferably employed in building materials. Architectural structures such as houses, buildings, roads, tunnels, or the like, manufactured by employing the aforementioned building materials, can exhibit superior water resistance and contamination resistance effects over time.

Also, the present invention can be applied to air cleaners (including air conditioners or the like) and water cleaners (including pitchers, pots or the like), and can exert effects of preventing or reducing contaminants in air and water, respectively.

### Examples

Hereafter, the present invention will be illustrated in detail by examples. However, the present invention is not limited to the examples.

### (Example 1-1)

0.463g of 97% CuCl₂/2H₂O (Nihon Kagaku Sangyo Co., Ltd.) was completely dissolved into 500ml of pure water. To this solution, 10g of 50% solution of titanium (IV) tetrachloride (Sumitomo Sticks Co., Ltd.) was added, and pure water was further added until the solution reached 1000ml. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of copper hydroxide and titanium hydroxide was precipitated.

The precipitate was washed with pure water until the conductivity of the supernatant fluid became 0.8mS/m or less, and washing was ended when the conductivity became 0.8mS/m in order to obtain 340g of hydroxides-containing liquid with a concentration of 0.81wt%. Next, this liquid was cooled to between 1 and 5°C, and was stirred for 16 hours after adding 25g of 35% hydrogen peroxide aqueous solution (Taiki Yakuhin Kogyo Co., Ltd.) to obtain 365g of a clear green dispersion of copper-doped amorphous titanium peroxide with a concentration of 0.90wt%. By diluting this with pure water, 385g of a dispersion of copper-doped amorphous titanium peroxide with a concentration of 0.85wt% was prepared.

### (Example 1-2)

0.594g of NiCl₂/6H₂O (Nihon Kagaku Sangyo Co., Ltd.) was completely dissolved into 500ml of pure water. To this solution, 10g of 50% solution of titanium (IV) tetrachloride (Sumitomo Sticks Co., Ltd.) was added, and pure water was further added until the solution reached 1000ml. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of nickel hydroxide and titanium hydroxide was precipitated.

The precipitate was washed with pure water until the conductivity of the supernatant fluid became 0.8mS/m or less, and washing was ended when the conductivity became 0.65mS/m in order to obtain 343g of hydroxide-containing liquid with a concentration of 0.77wt%. Next, this liquid was cooled to between 1 and 5°C, and was stirred for 16 hours after adding 25g of 35% hydrogen peroxide aqueous solution (Taiki Yakuhin Kogyo Co., Ltd.) to obtain 374g of a clear pale yellow dispersion of nickel-doped amorphous titanium peroxide with a concentration of 0.87wt%. By diluting this with pure water, 381g of a dispersion of nickel-doped amorphous titanium peroxide with a concentration of 0.85wt% was prepared.

### (Example 1-3)

0.626g of CoCl₂/6H₂O (Kanto Chemical Co., Inc.) was completely dissolved into 500ml of pure water. To this solution, 10g of 50% solution of titanium (IV) tetrachloride (Sumitomo Sticks Co., Ltd.) was added, and pure water was further added until the solution reached 1000ml. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of cobalt hydroxide and titanium hydroxide was precipitated.

The precipitate was washed with pure water until the conductivity of the supernatant fluid became 0.8mS/m or less, and washing was ended when the conductivity became 0.68mS/m in order to obtain 341g of hydroxide-containing liquid with a concentration of 0.72wt%. Next, this liquid was cooled to between 1 and 5°C, and was stirred for 16 hours after adding 25g of 35% hydrogen peroxide aqueous solution (Taiki Yakuhin Kogyo Co., Ltd.) to obtain 364g of a translucent dark green dispersion of cobalt-doped amorphous titanium peroxide with a concentration of 0.85wt%.

### (Example 1-4)

0.521g of MnCl₂/4H₂O (Koso Chemical Co., Ltd.) was completely dissolved into 500ml of pure water. To this solution, 10g of 50% solution of titanium (IV) tetrachloride (Sumitomo Sticks Co., Ltd.) was added, and pure water was further added until the solution reached 1000ml. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of manganese hydroxide and titanium hydroxide was precipitated.

The precipitate was washed with pure water until the conductivity of the supernatant fluid became 0.8mS/m or less, and washing was ended when the conductivity became 0.65mS/m in order to obtain 343g of hydroxide-containing liquid with a concentration of 0.77wt%. Next, this liquid was cooled to between 1 and 5°C, and was stirred for 16 hours after adding 25g of 35% hydrogen peroxide aqueous solution (Taiki Yakuhin Kogyo Co., Ltd.) to obtain 367g of a translucent dark brown dispersion of manganese-doped amorphous titanium peroxide with a concentration of 0.87wt%. By diluting this with pure water, 375g of a dispersion of nickel-doped amorphous titanium peroxide with a concentration of 0.85wt% was prepared.

### (Example 1-5)

0.712g of FeCl₃/6H₂O was completely dissolved into 500ml of pure water. To this solution, 10g of 50% solution of titanium (IV) tetrahloride (Sumitomo Sticks Co., Ltd.) was added, and pure water was further added until the solution reached 1000ml. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of iron hydroxide and titanium hydroxide was precipitated. The precipitate was washed with pure water until the conductivity of the supernatant fluid became 0.8mS/m or less, and washing was ended when the conductivity became 0.744mS/m in order to obtain 420g of hydroxide-containing liquid with a concentration of 0.47wt%.

Next, this liquid was cooled to between 1 and 5°C, and was stirred for 16 hours after adding 25g of 35% hydrogen peroxide aqueous solution (Taiki Yakuhin Kogyo Co., Ltd.) to obtain 440g of a clear deep yellow brown dispersion of iron-doped amorphous titanium peroxide with a concentration of 0.44wt%. By concentrating this with an ultrafiltration concentrator, 220g of the dispersion with a concentration of 0.85wt% was prepared.

### (Example 1-6)

0.359g of ZnCl₂ was completely dissolved into 500ml of pure water. To this solution, 10g of 50% solution of titanium (IV) tetrachloride (Sumitomo Sticks Co., Ltd.) was added, and pure water was further added until the solution reached 1000ml. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of zinc hydroxide and titanium hydroxide was precipitated. The precipitate was washed with pure water until the conductivity of the supernatant fluid became 0.8mS/m or less, and washing was ended when the conductivity became 0.713mS/m in order to obtain 409g of hydroxide-containing liquid with a concentration of 0.48wt%.

Next, this liquid was cooled to between 1 and 5°C, and was stirred for 16 hours after adding 25g of 35% hydrogen peroxide aqueous solution (Taiki Yakuhin Kogyo Co., Ltd.) to obtain 430g of a clear yellow brown dispersion of zinc-doped amorphous titanium peroxide.

### (Example 2)

20g of 50% solution of titanium (IV) tetrachloride (Sumitomo Sticks Co., Ltd.) was added to 1000g of pure water, and pure water was further added until the solution reached 2000g. An ammonia water which had been prepared by 10 times dilution of 25% aqueous ammonia (Takasugi Pharmaceutical Co., Ltd.) was added dropwise to this in order to adjust the pH thereof to 7.0, and thereby a mixture of titanium hydroxides was precipitated. The precipitate was washed with pure water until the conductivity of the supernatant fluid became 0.8mS/m or less, and washing was ended when the conductivity became 0.738mS/m in order to obtain 860g of hydroxide-containing liquid with a solid content concentration of 0.73wt%.

Next, this liquid was cooled to between 1 and 5°C, and was stirred for 16 hours after adding 50g of 35% hydrogen peroxide aqueous solution (Taiki Yakuhin Kogyo Co., Ltd.) to obtain 905g of a clear yellow brown dispersion of amorphous titanium peroxide with a solid content concentration of 0.86wt%.

100g of the above amorphous titanium peroxide dispersion was collected, 2.0g of a silver nitrate aqueous solution adjusted to be 0.05 mole/liter was added thereto, and the mixture was stirred to obtain 102g of a clear yellow amorphous titanium peroxide dispersion in which silver was doped.

### (Test Liquids 1-6)

Test Liquids 1-6 were prepared by mixing each of the metal-doped amorphous titanium peroxide dispersions prepared in Examples 1-1 to 1-6 with the silver-doped amorphous titanium peroxide dispersion prepared in Example 2, respectively, with a volume ratio of 1:1, followed by adding SH3746M (Dow Corning Toray CO., Ltd.) as an organic silicon compound at a concentration of 0.1%.

### (Test Substrates 1-6)

Test Liquids 1-6 were applied onto white ceramic tiles (10mm*10mm) or transparent float glass sheets(10mm*10mm: thickness=3mm) marketed by Daito Corporation with a brush, followed by heating at 350°C for 15 minutes to dry in order to obtain Test Substrates 1-6. On the surface of each of Test Substrates 1-6, a layer with a thickness of about 80nm was formed.

### (Comparative Substrates 1-7)

As an organic silicon compound, SH3746M (Dow Corning Toray, Co., Ltd.) was added to each of the dispersions prepared in Examples 1-1 to 1-6 as well as Example 2. The resulting liquids were applied onto white ceramic tiles (10mm*10mm) or transparent float glass sheets (10mm*10mm: thickness=3mm) marketed by Daito Corporation with a brush, followed by heating at 350°C for 15 minutes to dry in order to obtain Comparative Substrates 1-6. On the surface of each of Comparative Substrates 1-6, a layer with a thickness of about 80nm was formed.

### (Comparative Substrates 8 and 9)

A liquid for imparting photocatalytic function (B50: Sustinable Titania Technology Inc.) and a liquid for imparting a positive charge (Z18-1000A: Sustainable Titania Technology Inc.) were applied onto white ceramic tiles (10mm*10mm) or transparent float glass sheets (10mm*10mm: thickness=3mm) marketed by Daito Corporation with a brush, followed by heating at 350°C for 15 minutes to dry in order to obtain Comparative Substrates 8 and 9. On the surface of each of Comparative Substrates 8 and 9, a layer with a thickness of about 80nm was formed.

### (Evaluation 1)

Two pairs (float glass sheets) of Test Substrates 1-6 and Comparative Substrates 1-9 were provided. On the surface of each glass sheet, a silicone sealing agent for buildings (SE-960: Dow Corning Toray Co., Ltd.) was applied as shown in FIG. 7. One pair was left indoors for 48 hours. The other pair was exposed to the outdoors (Ureshino-city, Saga-prefecture, Kyushu) for 3 months (from February 2006 to May 2006). Pure water was sprinkled with a common sprayer on each sheet, and upward and downward diffusion widths of the sealing agent were measured. The results are shown in Tables 1 to 3.

**Table 1**

| | | Test Substrate 1 | Test Substrate 2 | Test Substrate 3 | Test Substrate 4 | Test Substrate 5 | Test Substrate 6 |
|---|---|---|---|---|---|---|---|
| 48 hours left indoors | Upward Diffusion Width | 2mm | 2mm | 2mm | 2mm | 4mm | 2mm |
| | Downward Diffusion Width | 2mm | 2mm | 2mm | 2mm | 4mm | 2mm |
| 3 months left outdoors | Upward Diffusion Width | 8mm | 11mm | 10mm | 10mm | 9mm | 10mm |
| | Downward Diffusion Width | 3mm | 5mm | 5mm | 5mm | 6mm | 6mm |

**Table 2**

| | | Comp. Sub. 1 | Comp. Sub.2 | Comp. Sub.3 | Comp. Sub. 4 | Comp. Sub. 5 | Comp. Sub. 6 | Comp Sub. 7 |
|---|---|---|---|---|---|---|---|---|
| 48 hours left indoors | Upward Diffusion Width | 5mm | 8mm | 8mm | 8mm | 8mm | 8mm | 2mm |
| | Downward Diffusion width | 5mm | 8mm | 8mm | 8mm | 8mm | 8mm | 2mm |
| 3 months Width left outdoors | Upward Diffusion | 15mm | 24mm | 22mm | 20mm | 25mm | 25mm | 30mm |
| | Downward Diffusion width | 10mm | 20mm | 18mm | 15mm | 20mm | 20mm | 10mm |

**Table 3**

| | | Comp. Sub. 8 | Comp. Sub. 9 |
|---|---|---|---|
| 48 hours left indoors | Upward Diffusion Width | 10mm | 5mm |
| | Downward Diffusion Width | 10mm | 5mm |
| 3 months left outdoors | Upward Diffusion Width | 40mm | 12mm |
| | Downward Diffusion Width | 30mm | 7mm |

The upward and downward diffusions of the sealing agent were based primarily on those of a water-repellant silicone oil component in the sealing agent. Test Substrates 1-6 having both positive and negative charges had a smaller diffusion width than Comparative Substrates 1-9 having only a positive or negative charge. Therefore, Test Substrates 1-6 were superior with respect to effects of preventing contaminants over time as compared to Comparative Substrates 1-9.

### (Evaluation 2)

Two pairs (ceramic tiles) of Test Substrates 1-6 and Comparative Substrates 1-9 were provided. They were placed in a container made from polypropylene together with 2L of tap water in Shibuya District, Tokyo, and were left outdoors for 6 months (from May 2005 to October 2005). The content was maintained at 2L by supplementing tap water once per month. One month later, one pair was taken out. 6 months later, the other pair was taken out. After washing the surface thereof with tap water, the adhesion of algae to the substrates in water, i.e., suspension in water, was evaluated. The results are shown in Tables 4 and 5.

**Table 4**

| | Test Substrate 1 | Test Substrate 2 | Test Substrate 3 | Test Substrate 4 | Test Substrate 5 | Test Substrate 6 |
|---|---|---|---|---|---|---|
| 1 month left | - | - | - | - | - | - |
| 6 months left | - | + | + | - | + | + |

**Table 5**

| | Comp. Sub. 1 | Comp. Sub. 2 | Comp. Sub. 3 | Comp. Sub. 4 | Comp. Sub. 5 | Comp. Sub. 6 | Comp. Sub. 7 | Comp. Sub. 8 | Comp. Sub. 9 |
|---|---|---|---|---|---|---|---|---|---|
| 1 month left | - | + | + | - | + | + | - | ++ | + |
| 6 months left | ++ | +++ | +++ | +++ | ++ | +++ | ++ | +++ | ++ |

| | | | | | | | | | |
|---|---|---|---|---|---|---|---|---|---|
| +++: Amount of algae attached to the substrate = 70% to 100% (Suspension in water = Highest) ++: Amount of algae attached to the substrate = 40% to 70% (Suspension in water = high) +: Amount of algae attached to the substrate = 10% to 40% (Suspension in water = low) -: Amount of algae attached to the substrate = 0% to 10% (Suspension in water = lowest) | | | | | | | | | |

Test Substrates 1-6 having both positive and negative charges had a smaller amount of algae and provided water with higher transparency as compared to Comparative Substrates 1-9 having only a positive or negative charge. Therefore, Test Substrates 1-6 were superior with respect to effects of preventing contaminants over time as compared to Comparative Substrates 1-9. It should be noted that the water contacted with Test Substrates 1 and 4 did not have any suspension even after 6 months, and therefore Test Substrates 1 and 4 showed particularly superior effects for preventing water contamination.

### (Evaluation 3)

One drop of purified water was dripped by means of a dropper from a height of within 10 mm onto Test Substrates 1-6 and Comparative Substrates 1-9. Subsequently, visual observation of the contact angle formed by the dripped aqueous droplet was carried out by means of a protractor meter.

Next, each substrate was immersed in tap water in Shibuya District, Tokyo for 5 minutes, and was dried under room temperature. One drop of purified water was dripped by means of a dropper from a height of within 10 mm onto the substrates. Subsequently, visual observation of a contact angle formed by the dripped aqueous droplet was carried out by means of a protractor meter. This evaluation was repeated for three points on the substrate, and the average value was obtained. The results are shown in Tables 6 and 7.

**Table 6**

| | Test Substrate 1 | Test Substrate 2 | Test Substrate 3 | Test Substrate 4 | Test Substrate 5 | Test Substrate 6 |
|---|---|---|---|---|---|---|
| Before immersion | 5° | 5° | 5° | 5° | 5° | 5° |
| After immersion | Less than 10° | Less than 10° | Less than 10° | Less than 10° | Less than 10° | Less than 10° |

**Table 7**

| | Comp. Sub. 1 | Comp. Sub. 1 | Comp. Sub. 1 | Comp. Sub. 1 | Comp. Sub. 1 | Comp. Sub. 1 | Comp. Sub. 1 | Comp. Sub. 1 | Comp. Sub. 1 |
|---|---|---|---|---|---|---|---|---|---|
| Before immersion | 5° | 5° | 5° | 5° | 5° | 5° | 5° | 5° | 5° |
| Afterimmersion | 25° | 30° | 40° | 40° | 45° | 30° | 20° | 15° | 30° |

On the other hand, the same evaluation was made with purified water which did not contain chlorine-based compounds instead of tap water containing chlorine-based compounds. In this case, 5 minutes after the immersion, the contact angle of water on the substrate did not change.

Accordingly, it can be understood that Test Substrates 1-6 having both positive and negative charges on the surface thereof adsorbed less chlorine-based compounds as compared to Comparative Substrates 1-9, and therefore the formers were more water-repellant.

### (Evaluation 4)

The electrostatic voltages on Test Substrate 1, and Comparative Substrates 8 and 9, were measured.

The static electricity on each substrate was removed by an electrostatic removal blower (SJ-F020: Keyence Corporation), and each substrate was placed on a SUS earthed plate such that the distance from an electrostatic sensor (SK: Keyence Corporation) was 5mm. The electrostatic voltage on the substrate was measured three times under the conditions of air temperature of 26°C, humidity of 70% and -50V of floating electric ions, and the average thereof was regarded as a measured value. The results are shown in Table 8.

**Table 8**

| | Electrostatic Voltage : V |
|---|---|
| Test Substrate 1 | +35 |
| Comparative Substrate 8 | -162 |
| Comparative Substrate 9 | +120 |

It is understood from the above results that the surface of Test Substrate 1 was positively charged with a relatively small electrostatic voltage, while the surface of Comparative Substrate 8 had a strong negative charge and the surface of Comparative Substrate 9 had a strong positive charge.

## Claims

1. A method for preventing or reducing contamination of a surface of a substrate, **characterized by** arranging a positively-charged substance and a negatively-charged substance on the surface of the substrate or in a surface layer of the substrate.

2. A method for protecting a surface of a substrate, **characterized by** arranging a positively-charged substance and a negatively-charged substance on the surface of the substrate or in a surface layer of the substrate.

3. The method according to claim 1 or 2, wherein said positively-charged substance is at least one substance having a positive charge selected from the group consisting of
(1) a positive ion;
(2) a conductor or dielectric having a positive charge; and
(3) a composite formed from a conductor having a positive charge and a dielectric or a semiconductor.

4. The method according to claim 1 or 2, wherein said negatively-charged substance is at least one substance having a negative charge selected from the group consisting of
(4) a negative ion;
(5) a conductor or dielectric having a negative charge;
(6) a composite formed from a conductor having a negative charge and a dielectric or a semiconductor; and
(7) a substance having photocatalytic function.

5. The method according to any one of claims 1 to 4, wherein the electrostatic voltage on the surface of the substrate is from -50V to 50V.

6. The method according to any one of claims 1 to 5, wherein said substrate is hydrophilic or hydrophobic, or water repellent or oil repellent.

7. The method according to any one of claims 1 to 6, wherein said positively-charged and negatively-charged substances form a layer.

8. The method according to claim 7, wherein between said surface of the substrate and said layer formed from the positively-charged and negatively-charged substances, an intermediate layer is formed.

9. The method according to claim 7, wherein a coating layer is formed on the layer of the positively-charged and negatively-charged substances.

10. The method accoding to claim 8 or 9, wherein the intermediate layer and/or the coating layer is/are hydrophilic or hydrophobic, or water repellent or oil repellent.

11. A product comprising a substrate wherein contamination of the surface thereof is prevented or reduced, or the surface thereof is protected, in accordance with the method recited in any one of Claims 1 to 10.

12. A use of the product for preventing or reducing contamination in air or water.

13. An agent for preventing contamination of the surface of a substrate or protecting a substrate, comprising positively-charged and negatively-charged substances.

14. The agent according to claim 13, further comprising an organic silicon compound.
